# EUROPÄISCHE PATENTSCHRIFT

(11) **EP 1 592 542 B1**
(45) Veröffentlichungstag und Bekanntmachung des Hinweises auf die Patenterteilung: **09.06.2010**
(21) Anmeldenummer: 04709572.4
(22) Anmeldetag: 10.02.2004
(51) Int. Cl.: B29C 45/72, B29C 45/73

(54) **KÜHLSYSTEM ZUM KÜHLEN VON WERKZEUGTEILEN**
COOLING SYSTEM FOR THE COOLING OF TOOL PIECES
SYSTEME DE REFROIDISSEMENT PERMETTANT DE REFROIDIR DES PARTIES D'OUTIL

(30) Priorität: 12.02.2003 DE 10305669
(43) Veröffentlichungstag der Anmeldung: 09.11.2005
(73) Patentinhaber: MHT Mold & Hotrunner Technology AG, 65239 Hochheim am Main (DE)
(72) Erfinder: LAUSENHAMMER, Manfred, 54329 Konz-Niedermennig (DE); WAGNER, Christian, 55118 Mainz (DE)
(74) Vertreter: Weber, Roland
(86) Internationale Anmeldenummer: PCT/DE2004/000235
(87) Internationale Veröffentlichungsnummer: WO 2004/071743

(56) Entgegenhaltungen:
- WO-A-02/051614
- WO-A-03/076164
- US-A- 2 542 263
- US-A1- 2001 038 163
- PATENT ABSTRACTS OF JAPAN Bd. 2000, Nr. 07, 29. September 2000 (2000-09-29) -& JP 2000 108170 A (MITSUBISHI HEAVY IND LTD), 18. April 2000 (2000-04-18)
- STEPHANE L: "OPTIMISER LE CHAUFFAGE DES MOULES PAR THERMOFLUIDES" PLASTIQUES MODERNES ET ELASTOMERES, COMPAGNIE FRANCAISE D'EDITIONS. PARIS, FR, Bd. 41, Nr. 6, 1. Juli 1989 (1989-07-01), Seiten 46-47, XP000113396 ISSN: 0032-1303

## Beschreibung

Die Erfindung betrifft ein Kühlsystem zum Kühlen von Werkzeugteilen mit Hilfe eines von einem Fluideinlaß über Anschlußleitungen zu einem Fluidauslaß geführten Fluids, wobei die Werkzeugteile zwischen wenigstens einer mit dem Fluideinlaß verbundenen und wenigstens einer mit dem Fluidauslaß verbundenen Anschlußleitung in Durchströmverbindung angeschlossen sind, wobei zwischen der wenigsten einen mit dem Fluideinlaß verbundenen Anschlußleitung einerseits und der wenigstens einen mit dem Fluidauslaß verbundenen Anschlußleitung andererseits wenigstens eine zusätzliche Anschlußleitung und mit letzterer in Strömungsverbindung stehende Werkzeugteile derart zwischengeschaltet sind, daß das Fluid auf seinem Strömungsweg nacheinander durch wenigstens zwei Werkzeugteile strömt.

Aus der EP-B2-0.283.644 ist eine Spritzgießmaschine bekannt, die eine Spritzformplatte mit Kavitäten und eine Kernplatte mit vorstehenden Kernen aufweist, wobei die Anzahl der Kerne der Anzahl der Kavitäten entspricht. Beim Zusammenfahren der Formplatte einerseits und der Kernplatte andererseits greifen die Kerne in die Kavitäten ein und bilden in geschlossener Position dazwischen die Spritzformkavität, in welcher durch einen Spritzgießvorgang ein hohler Vorformling aus Kunststoff geformt wird. Aus diesen Vorformlingen, die insbesondere aus PET bestehen, werden später die bekannten PET-Flaschen geblasen (Polyethylentherephtalat = PET). Nach dem Spritzgießen müssen die Vorformlinge genügend abgekühlt werden, um ohne Beschädigung der Vorformlinge ein Verarbeiten derselben nach dem Spritzvorgang zu erlauben.

Das Abkühlen erfolgt in den bekannten Spritzgießmaschinen über an einer Trägerplatte befestigte Hülsen, die mit einem Fluid, praktischerweise Kühlwasser, durchströmt und dadurch gekühlt werden.

Damit die Kühlung einer großen Anzahl von Werkzeugteilen, zum Beispiel Hülsen oder Kernen, gleichzeitig in einer möglichst kompakten Maschine durchgeführt werden kann, sind Trägerplatten mit einer Vielzahl daran befestigter Hülsen und mit in der Trägerplatte verlaufenden Fluidleitungen entwickelt worden. Von dem Fluideinlaß für die ganze Trägerplatte wird das Kühlwasser parallel und mehr oder weniger gleichzeitig zu den Hülsen geführt, die als die betreffenden Werkzeugteile durchströmt werden. Danach wird das teilweise erwärmte Kühlwasser zu einem Fluidauslaß herausgeführt.

Das bekannte Kühlsystem weist die eingangs genannten Merkmale auf. Es ist jedoch mit erheblichen Nachteilen behaftet. Obwohl die Kühlleitungen in den einzelnen Werkzeugteilen, zum Beispiel den Kernen, jeweils für sich einen kleinen Querschnitt haben, addieren sich doch bei einer großen Anzahl von gleichzeitig durchströmten Kernen die einzelnen Leitungsquerschnitte erheblich auf. Geht man zum Beispiel von einem bekannten Fluideinlaß mit einem Durchmesser von 2,54 cm aus, dann stehen etwa 2000 mm² als Einlauffläche zur Verfügung. Das Gleiche gilt für den Fluidauslaß. Bei einer 48-er Kernplatte stehen andererseits aber Durchströmquerschnitte gegenüber, die zusammen eine Fläche von 3770 mm² bieten. Dieser großen Verbrauchsfläche steht nur die zuvor genannte kleine Querschnittsfläche am Fluideinlaß gegenüber. Die zu versorgende Fläche an den Kernen ist also etwa doppelt so groß wie die zur Verfügung stehende Eintrittsfläche für das Kühlfluid. Das bedeutet einen starken Druckabfall vom Fluideinlaß bis zum Auslaß, und im Bereich der Kerne gibt es durch die infolgedessen niedrigeren Strömungsgeschwindigkeiten des Fluids kaum noch Turbulenzen. Bei fehlenden Turbulenzen sinkt aber auch die Kühlwirkung stark ab. Gleichzeitig kann die Kernplatte, wenn sie die Anschlußleitungen enthält, mit Nachteil versumpfen, weil Verunreinigungen durch die langsame Strömung und den geringen Druck in den Fluidleitungen abgesetzt und nicht weggespült werden. Der Wärmeübergang zwischen Fluideinlaß und Fluidauslaß verringert sich mit weiterem Nachteil.

Für eine Kavitätenplatte hat man bereits versucht, diese Nachteile zu mildern und Fluidturbulenzen dadurch zu vergrößern, daß man bei einer betriebsinternen Ausführungsform teilweise die Durchflußmöglichkeit eines Fluids durch Unterbrechungen sperrt. Man hat dadurch eine Zweiteilung einer zuvor einzigen Leitung erreicht und damit aus dem ursprünglichen einzigen Strömungsweg zwei Strömungswege gestaltet. Dieser ältere Lösungsversuch bezieht sich aber auf eine speziell ausgestaltete Formplatte, bei welcher die Aufteilung des Kühlsystems in ganze Sektionen dadurch erfolgt, daß die Unterbrechungen, Sperren bzw. Barrieren in den einzelnen Anschlußleitungen vorgesehen werden.

Eine solche Kavitätenplatte ist in der WO 03/076164 beschrieben, wobei dieses Dokument gemäß Artikel 54 (3) und (4) EPÜ zu behandeln ist. Dieses ältere Kühlsystem beschreibt nur einen Abschnitt aufweisendes Verteilerrohr.

In der JP-A-2000108170 ist ein Kühlsystem gezeigt, bei dem mehrere Werkzeugteile nacheinander mit Kühlfluid durchströmt werden.

Der Erfindung liegt die Aufgabe zugrunde, das bekannte Kühlsystem gemäß den Merkmalen der eingangs erwähnten Art so umzugestalten, daß außer Kavitäten bildenden Hülsen auch andere Werkzeugteile mit größerem Wirkungsgrad und bei Vergrößerung von Fluidturbulenzen gekühlt werden können.

Bei dem Kühlsystem zum Kühlen von Werkzeugteilen mit Hilfe eines von einem Fluideinlaß über Anschlußleitungen zu einem Fluidauslaß geführten Fluids, bei welchen die Werkzeugteile zwischen wenigstens einer mit dem Fluideinlaß verbundenen und wenigstens einer mit dem Fluidauslaß verbundenen Anschlußleitung in Durchströmverbindung angeschlossen sind, wobei zwischen der wenigstens einen mit dem Fluideinlaß verbundenen Anschlußleitung einerseits und der wenigstens einen mit dem Fluidauslaß verbundenen Auslaßleitung andererseits wenigstens eine zusätzliche Anschlußleitung und mit letzterer in Strömungsverbindung stehende Werkzeugteile derart zwischengeschaltet sind, daß das Fluid auf seinem Strömungsweg nacheinander durch wenigstens zwei Werkzeugteile strömt, ist zur Lösung der Aufgabe der Fluideinlaß und/oder der Fluidauslaß jeweils mit einem Verteilerrohr verbunden, und das Verteilerrohr ist durch wenigstens einen strömungsdicht eingesetzten Stopfen in wenigstens zwei getrennte Abschnitte aufgeteilt oder ist durch zwei Sacklochbohrungen gebildet, so daß es aus wenigstens zwei getrennten Abschnitten besteht, und das Werkzeugteil ist ein hülsenförmiger Formkern eines Spritzgießwerkzeugs zum Spritzgießen von Vorformlingen aus Kunststoff. Jeder Kern stellt ein von einem Kühlfluid durchflossenes Element dar. Die Erfindung ist auch bei solchen Kernen anwendbar, die an einer Platte befestigt sind, zum Beispiel an einer Kernplatte. Als Kühlfluid ist wieder an Wasser gedacht, welches von einem Einlaß über Anschlußleitungen zu einem Auslaß geführt wird. Die Anschlußleitungen schaffen den Anschluß zu den Werkzeugteilen. Bei den bekannten Kühlsystemen strömt das Fluid aus dem Einlaß über eine Anschlußleitung, danach über das Werkzeugteil bzw. in der Praxis meist eine Reihe von Werkzeugteilen, zu einer anderen Anschlußleitung und von dort direkt zum Auslaß. Die eine Anschlußleistung ist mit dem Fluideinlaß und die andere mit dem Fluidauslaß verbunden. Die Werkzeugteile befinden sich zwischen der einen und der anderen Anschlußleitung.

Wenn nun nach der Lehre der Erfindung zwischen den beiden Anschlußleitungen der bekannten Kühlsysteme zusätzlich eine Anschlußleitung zwischengeschaltet wird, die man auch als Zwischenleitung bezeichnen könnte, ist es möglich, ein zusätzliches Werkzeugteil bzw. in der Praxis wiederum eine zusätzliche Reihe oder Gruppe von Werkzeugteilen so zwischenzuschalten, daß das Kühlfluid auf seinem Weg vom Einlaß zum Auslaß zuerst durch die eine Gruppe von Werkzeugteilen und danach (mit Hilfe der zusätzlichen Anschlußleitung) durch die andere Gruppe von Werkzeugteilen strömt. Wenn man bekannte Systeme mit bereits vorhandenen n-Werkzeugteilen erfindungsgemäß verbessern will, kann man durch Umgestaltung vorhandener Leitungen diese drei Gruppen von Anschlußleitungen derart schaffen, daß das Wasser zweimal n/2 Werkzeugteile kühlend durchströmt; oder alternativ bei Verdoppelung auf 2-n Werkzeugteile das Kühlwasser zuerst durch n-Werkzeugteile und danach durch weitere n-Werkzeugteile durchströmt. Das zur Kühlung verwendete Fluid, insbesondere Wasser, wird dadurch besser genutzt, es werden höhere Turbulenzen erzeugt, die Wärmeabfuhr wird verbessert, und die Verschmutzungsgefahr wird erheblich reduziert, d.h. ein Versumpfen der Leitungen ist weitgehend vermieden.

Bei den bisher bekannten Kühlsystemen gibt es nur die mit dem Fluideinlaß verbundenen Anschlußleitungen, der Einfachheit halber hier einlaßseitige Anschlußleitungen genannt, wobei zur Vereinfachung von nur einer einzigen einlaßseitigen Anschlußleitung gesprochen wird; und dasselbe auslaßseitig, d.h. die eine oder mehreren mit dem Fluidauslaß verbundenen Anschlußleitungen. Dazwischen befinden sich als Strömungsverbindungen die Werkzeugteile, die also zum Beispiel Kerne, Hülsen oder andere durchflossene Elemente sein können. Für den Strömungsweg des Fluids bedeutet dies, daß das Fluid aus der einen Anschlußleitung über das Werkzeugteil in die andere strömt. Im bekannten Fall gibt es keine Aufteilung von n in 2 x n/2 oder zum Beispiel 2n in n + n, wenn man die Gruppe der Werkzeugteile sich mit n Werkzeugteilen vorstellt. Das eintretende Kühlfluid sucht sich stets den leichtesten Weg geringsten Widerstandes an der einen Anschlußleitung zu der anderen. Damit werden nur diejenigen Werkzeugteile durchströmt und gekühlt, bei denen der Strömungswiderstand hinreichend klein ist. Durch die sich absetzenden Verschmutzungen in den bekannten Kühlsystemen, zum Beispiel in der bekannten Trägerplatte, können sich nach und nach immer höhere Strömungswiderstände aufbauen mit der Folge, daß nicht mehr alle Werkzeugteile in gewünschter Weise zum Erreichen eines Kühleffekts durchströmt werden.

Wenn erfindungsgemäß nicht alle n Werkzeugteile in zum Beispiel nur einer einzigen Sektion parallelgeschaltet sind, sondern durch die Zwischenleitung zuerst n/2 Werkzeugteile und danach noch einmal n/2 Werkzeugteile durchströmt werden müssen, wird das Fluid mit Vorteil gezwungen, die doppelte Anzahl Werkzeugteile zu durchströmen mit dem weiteren Vorteil der schon genannten größeren Turbulenz, besseren Kühlwirkung und verringerten Verschmutzungsgefahr.

Wenn der Fluideinlaß und/oder der Fluidauslaß jeweils mit einem Verteilerrohr verbunden sind, ermöglicht das Verteilerrohr eine Vervielfältigung der beschriebenen Gegebenheiten, d.h. der vorstehend vom Prinzip her erwähnten einen Anschlußleitung zu einem Vielfachen von Anschlußleitungen. Das jeweilige Verteilerrohr kann einen großen Durchmesser haben und der Strömungsflüssigkeit einen geringen Widerstand entgegensetzen, auch wenn anstelle einer Anschlußleitung eine Vielzahl von Anschlußleitungen mit den entsprechend verbundenen Reihen von Werkzeugteilen von dem Verteilerrohr abgeht bzw. zu diesem (im Falle des Fluidauslasses) hinführen. Die vorgesehenen Zwlschenleltungen, d.h. die zwischengeschalteten, zusätzlichen Anschlußleitungen, hindern eine Vervielfachung der Kühlwirkung nicht.

Nimmt man als Werkzeugteil einen hülsenförmigen Formkern eines Spritzgießwerkzeugs zum Spritzgießen von Vorformlingen aus Kunststoff, dann wird auf einen solchen Formkern in an sich bekannter Weise Kunststoff aufgespritzt und durch eine entsprechend übergestülpte Hülse zum Vorformling ausgeformt. Um den Kunststoff zu kühlen, muß der Formkern gekühlt sein. Hier verwendet man Kühlwasser, welches durch ein entsprechendes Kühlsystem von Einlaß, durch den Mantel des Formkerns unter dessen Oberfläche zum Auslaß gedrückt wird. Nach dem Spritzen nimmt das Kühlwasser die Wärmeenergie auf, und es ist erwünscht, die Kühlkapazität des Wassers möglichst gut auszunutzen. Dieses Ausnutzen gelingt durch die Verwendung des erfindungsgemäß angestrebten Kühlsystems besonders gut. Auf diese Weise kann man wirkungsvolle, neue Spritzgießwerkzeuge herstellen und gegebenenfalls sogar vorhandene Spritzgießwerkzeuge umbauen und verbessern.

Das Verteilerrohr kann man durch wenigstens einen strömungsdicht eingesetzten Stopfen in wenigstens zwei getrennte Abschnitte aufteilen. Die in dem Verteilerrohr ursprünglich vorgesehene Fluidverbindung wird durch diesen Stopfen unterbrochen. Es ist für den Fachmann ersichtlich, daß man eine Anschlußleitung an nahezu jeder beliebigen Stelle, desgleichen auch ein Verteilerrohr an beliebigem Ort, mit einem Stopfen versehen kann. Der Stopfen ist sozusagen eine 100%-ige oder nahezu 100%-ige Barriere oder Sperrung. Stopfen können unterschiedlich aufgebaut sein, zum Beispiel aus einem elastomeren Material oder nur teilweise aus einem elastomeren Material mit zusätzlich einem harten und beständigen Material, zum Beispiel Stahl bestehen. Es gibt zwar auch ganz aus Metall gebildete Stopfen, mit denen man auch schon bei den bekannten Trägerplatten eine herstellungstechnisch offene Endseite versperrt. Bei den erfindungsgemäß vorgesehenen Stopfen ist es bevorzugt, Stahl oder Gummi oder Kombinationen aus beiden zu verwenden. Die Größe des Strömungsquerschnitts spielt keine Rolle. Man kann sowohl Anschlußleitungen als auch Verteilerrohre mit entsprechenden Stopfen versehen.

Besonders günstig ist es, wenn bei einer Ausführungsform die zusätzliche Anschlußleitung (die Zwischenleitung) zwei geschlossene Enden hat und zuflußseitig sowie abflußseitig mit den Werkzeugteilen verbunden ist. Der besondere Vorzug des beschriebenen Kühlsystems ergibt sich im Falle einer Trägerplatte für die jeweiligen Werkzeugteile. Die einzelnen Leitungen sind vorzugsweise als Bohrungen in einer solchen Trägerplatte geführt. Es versteht sich, das geradlinige Bohrungen besonders einfach hergestellt werden können, auch wenn sie einseitig oder wie hier beidseitig geschlossen sind. Lage und Ausgestaltung einer solchen zusätzlichen Anschlußleitung ist also einfach herstellbar und auch vom Volumen oder Raum in der Trägerplatte her ohne weiteres möglich.

Bei einer anderen Ausgestaltung der Erfindung ist es zweckmäßig, wenn die zusätzliche Anschlußleitung in einen zuflußseitigen Leitungszweig und einen abflußseitigen Leitungszweig aufgeteilt ist, die über ein Verteilerrohr verbunden sind. Es ist bisweilen von der Größe und Ausgestaltung der Trägerplatte abhängig, wie viele Verteilerrohre mit den Leitungen großen Durchmessers in den einzelnen Bereichen der Trägerplatte angeordnet werden können. So kann es beispielsweise zweckmäßig sein, ein Verteilerrohr an dem einen Ende der Platte und das andere Verteilerrohr am anderen Ende der Platte anzuordnen, um dazwischen entsprechend längere Anschlußleitungen und zusätzliche Anschlußleitungen anzuordnen. Dann erkennt der Fachmann durch die zuletzt genannte Lehre, daß er auf der einen Seite in der Trägerplatte ein kürzeres Verteilerrohr am Fluideinlaß und ebenso ein kürzeres Verteilerrohr am Fluidauslaß so anordnen kann, daß ein Ende der Trägerplatte durch diese beiden Verteilerrohre in vernünftigem Ausmaß gefüllt oder eingenommen wird mit der Folge, daß auf der gegenüberliegenden Seite der Trägerplatte Platz für ein anderes Verteilerrohr zur Verfügung steht. Die zusätzlichen Anschlußleitungen kann man nun überraschenderweise so ausgestalten, daß jede Leitung in zwei Zweige aufgeteilt wird, welche über das zuletzt erwähnte, in der Trägerplatte noch unterbringbare Verteilerrohr verbunden sind. Der Weg des Kühlfluids verläuft dann zum Teil in diesem Verteilerrohr zwischen den zwei Leitungszweigen. Vom Aufbau der Trägerplatte her hat sich diese Leitungsführung als herstellungstechnisch günstig erwiesen, zumal über dieses zweite Verteilerrohr, welches die Zweige der zusätzlichen Anschlußleitung führt, große Mengen Fluid transportiert werden können.

Erfindungsgemäß können ferner die Verteilerrohre gerade sein und in der Trägerplatte im Abstand zueinander parallel verlaufen. Hierdurch ergibt sich der herstellungstechnische Vorteil besonders deutlich.
Geradlinige Rohre können als Bohrungen, zum Beispiel Teflochbohrungen quer oder längs in einer Trägerplatte ausgeführt sein. Man kann ein in einer Linie verlaufendes Verteilerrohr sogar so unterteilen, daß man zwei Teilrohre, d.h. zwei Teilbohrungen, erhält. Diese Aufteilung gelingt entweder geometrisch durch das Anbringen zweier Sacklochbohrungen, oder man kann in einer einzigen Tieflochbohrung auch einen Stopfen einsetzen.

Diese Konstruktion erlaubt es, daß erfindungsgemäß die Verteilerrohre gerade sind und in einer Platte in einer Linie hintereinander im Abstand zueinander verlaufen.

Zweckmäßig ist die Erfindung weiter dadurch ausgestaltet, daß mehrere, parallel und im Abstand zueinander verlaufende zusätzliche Anschlußleitungen mit jeweils angeschlossenen Kernen als Werkzeugteilen zwischengeschaltet sind. Während die Verteilerrohre mit dem jeweils verhältnismäßig großen Durchmesser im allgemeinen über die Breite einer Trägerplatte verlaufend vorgesehen werden, erstrecken sich die erfindungsgemäß hier sogenannten zusätzlichen Anschlußleitungen bzw. die Zwischenleitungen im allgemeinen längs einer solchen Trägerplatte, vorzugsweise zwischen dem einen Verteilerrohr oder der Gruppe derselben an dem einen Ende der Platte zu dem anderen Verteilerrohr oder zu der Gruppe derselben am anderen Ende der Platte. Diese zusätzlichen Anschlußleitungen verlaufen im allgemeinen etwa senkrecht zu den Verteilerrohren und haben praktischerweise einen kleineren Durchmesser als die Verteilerrohre. Der Durchmesser der Anschlußleitungen muß so groß sein, daß ausreichend Fluid durch alle angeschlossenen Werkzeugteile fließen kann. Um für eine größere Kühlleistung zu sorgen oder die Anzahl der Werkzeugteile zu vergrößern, welche durch das Kühlsystem gemäß der Erfindung zu kühlen sind, ordnet man zweckmäßigerweise mehrere Anschlußleitungen parallel im Abstand zueinander an. Der Fachmann versteht, daß durch das Vorsehen der zusätzlichen Anschlußleitungen entsprechend viele zusätzliche Werkzeugteile durchströmt und damit gekühlt werden können. Ein solcher Leitungsaufbau ist auch in einer der üblichen Trägerplatten möglich, wenn man die vorstehenden empfohlenen Anordnungen der Leitungen beachtet.

Vom Prinzip her sieht das erfindungsgemäße Grundsystem, bei welchem die zusätzliche Anschluß- bzw. die Zwischenleitung wenigstens ein geschlossenes Ende hat und diese Leitung zuflußseitig und/oder abflußseitig mit den Werkzeugteilen verbunden ist, die Aufteilung der zusätzlichen Anschlußleitung (Zwischenleitung) in den zuflußseitigen Leitungszweig einerseits und den abflußseitigen Leitungszweig andererseits vor, wobei vorzugsweise die Leitungszweige über das erwähnte Verteilerrohr verbunden sind.

Dieses Grundsystem verlangt von dem durchströmenden Kühlfluid, daß es nacheinander erst durch das eine und danach durch das andere Werkzeugteil bzw. zunächst durch die eine Gruppe von Werkzeugteilen und danach durch die andere Gruppe von Werkzeugteilen strömt. Hierdurch ist die bessere Ausnutzung des Kühlfluids mit den erwähnten Vorteilen erreicht.

Die eine Art der Vervielfältigung der Kühlwirkung oder der Vervielfältigung der Anzahl der zu kühlenden Werkzeugteile besteht in der oben beschriebenen Weise darin, daß nicht eine zusätzliche Anschlußleitung entsprechend dem jeweiligen Grundsystem geschaltet ist, sondern daß man zwei oder entsprechend viele zusätzliche Anschlußleitungen parallel schaltet. Die Abflußleitung der einen Gruppe wird als Einlaßleitung der nächsten Gruppe genutzt.

Die andere Verbesserung und Vervielfältigung der Kühlwirkung sieht erfindungsgemäß vor, daß bei Verdoppelung des oben definierten Grundsystems, bei welchem die zusätzliche Anschluß- bzw. die Zwischenleitung wenigstens ein geschlossenes Ende hat und diese Leitung zuflußseitig und/oder abflußseitig mit den Werkzeugteilen verbunden ist, die Anzahl der nacheinander durchströmten Werkzeugteile verdoppelt wird. Es versteht sich, daß man das Grundsystem auch Vervierfachen oder entsprechend Vervielfachen kann, um danach die Anzahl der zu kühlenden Werkzeugteile zu vervielfachen. Dabei kann man mit Vorteil bei der Verwendung von geradlinigen Verteilerrohren entsprechend verbreiterte Trägerplatten einsetzen.

In Draufsicht auf die große Fläche einer Trägerplatte ist es bisweilen erwünscht, die Gesamtfläche zu verkleinern, und erlaubt, die Höhe der Platte zu vergrößern. Dadurch ergeben sich weitere und vielfältige Möglichkeiten, längere oder mehr Anschlußleitungen und Verteilerrohre in der jeweiligen Trägerplatte vorzusehen. So kann man erfindungsgemäß in vorteilhafter Weise die zusätzlichen Anschlußleitungen (Zwischenleitungen) in der Platte in einem anderen Niveau als die mit dem Ein- und/oder Auslaß verbundenen Anschlußleitungen anordnen. Die Platzprobleme in einer Trägerplatte lösen sich bei dieser zweckmäßigen Lösung in überraschender Weise. Mit anderen Worten können in einer etwas höher ausgestalteten Platte erheblich mehr Anschlußleitungen untergebracht werden, wenn man diese Leitungen in unterschiedlichen Niveaus anordnet.

Weitere Vorteile, Merkmale und Anwendungsmöglichkeiten der vorliegenden Erfindung ergeben sich aus der folgenden Beschreibung im Zusammenhang mit den anliegenden Zeichnungen. In diesen zeigen:
- Figur 1: ein bekanntes Kühlsystem, welches nicht eine Ausführungsform der Erfindung darstellt,
- Figur 2: eine zweite Ausführungsform des Kühlsystems, bei welchem das Prinzip der Figur 1 zugrunde gelegt wird, wobei mehrere, parallel und im Abstand zueinander verlaufende zusätzliche Anschlußleitungen vorgesehen sind,
- Figur 3: ebenso schematisch, wie die Ausführungsformen der Kühlsysteme nach den Figuren 1 - 4 das neue Grundsystem, bei welchen die zusätzlichen Anschlußleitungen in ein Verteilerrohr münden bzw. aus diesem gespeist werden,
- Figur 4: eine weitere schematische Ausführungsform eines Kühlsystems nach dem Grundsystem (verdoppelt),
- Figur 5: etwas konkretisiert, gleichwohl aber weitgehend noch abstrakt gehalten die Darstellung eines Kühlsystems nach dem Grundsystem, wobei die Verteilerrohre durch Stopfen unterteilt sind,
- Figur 6: konkreter den Aufbau einer Trägerplatte mit dem durch Bohrungen aufgebauten Kühlsystem, welches das Grundsystem verwendet; in der linken Hälfte bei einer Vierfachreihenkühlung und in der rechten Hälfte mit einer Zweifachreihenkühlung,
- Figur 7: eine Seitenansicht der Trägerplatte nach Figur 6 in Längsrichtung von einem Ende der Platte zum anderen gesehen,
- Figur 8: eine andere konkrete Ausführungsform bei einer Vierfachreihenkühlung und
- Figur 9: eine weitere andere Ausgestaltung des Kühlsystems mit Zweifachkühlung unter Verwendung des Grundsystems.

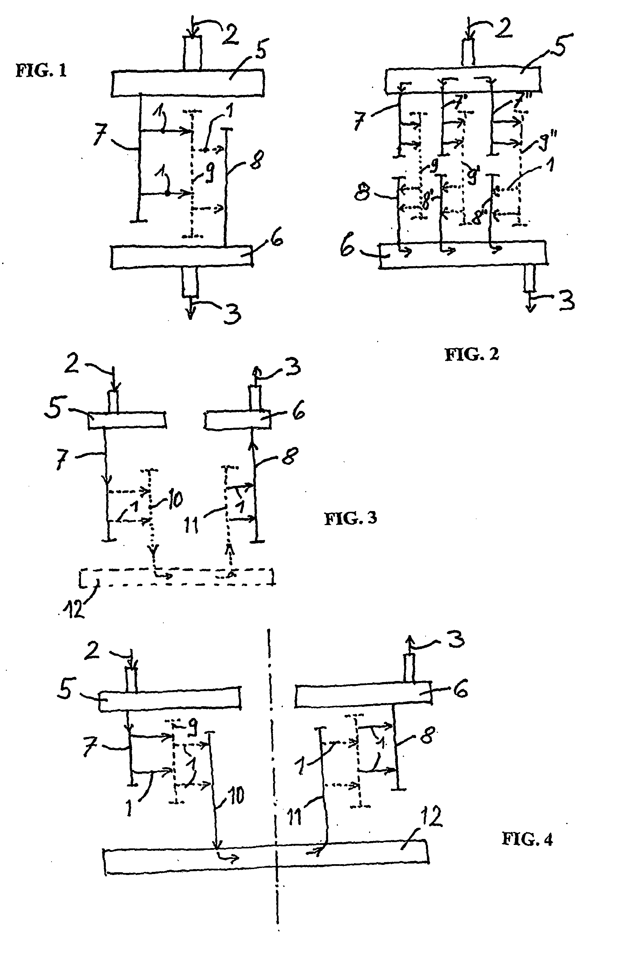

Figur 1 zeigt abstrakt ein bekanntes Kühlsystem, wobei die gezeigten Pfeile Werkzeugteile 1 darstellen, die zum Beispiel an einer Trägerplatte, bei der es sich um eine Kernplatte 14 handelt, angebrachte Kerne sind (welchen nicht gezeigte Vorformlinge aus Kunststoff aufgespritzt werden, die danach gekühlt werden sollen). Aus diesem Grund müssen diese Werkzeugteile 1 durch Kühlwasser (Fluid) durchströmt werden. Das Kühlfluid (Wasser) strömt an einer Stelle in das Werkzeugteil (den Kern) 1 ein und verläßt diesen nach Teilerwärmung an einer anderen Stelle, zum Beispiel an der Spitze des jeweils dargestellten Pfeils. In den Figuren ist der Fluideinlaß mit 2 bezeichnet, der Fluidauslaß hingegen mit 3. Der Fluideinlaß ist mit einem zuflußseitigen Verteilerrohr 5, der Fluidauslaß 3 mit einem abflußseitigen Verteilerrohr 6 verbunden. Zwischen den Verteilerrohren 5 und 6 sind Anschlußleitungen 7, 8 und 9 geschaltet, nämlich die mit dem Fluideinlaß 2 verbundene Anschlußleitung, die man als Zuflußleitung 7 bezeichnen kann. Die mit dem Fluidauslaß 3 verbundene Anschlußleitung kann man auch als Abflußleitung 8 bezeichnen. Zwischen diesen Anschlußleitungen 7 und 8 ist eine zusätzliche Anschlußleitung 9, die man auch als Zwischenleitung 9 bezeichnen kann, zwischengeschaltet. In den Figuren 1 bis 5 ist diese Zwischenleitung 9 gestrichelt dargestellt.

Bei der Ausführungsform der Figur 4 (Grundsystem) kann die Zwischenleitung 9 über einen zuflußseitigen Leitungszweig 10 und einen abflußseitigen Leitungszweig 11 verbunden sein, die ihrerseits über ein zwischengeschaltetes Verteilerrohr 12 verbunden und mit durchgezogener Linie dargestellt sind. Figur 4 hat übrigens die Besonderheit, daß das bekannte Kühlsystem und das neue Grundsystem verknüpft sind, wie noch erläutert wird.

Die Ausführungsform der Figur 2 stellt eine zweite Ausführungsform des bekannten Kühlsystems der Figur 1 in vervielfältigter Form dar. Von dem zuflußseitigen Verteilerrohr 5 gehen nämlich anstelle einer Zuflußleitung 7 (wie bei Figur 1) mehrere (hier drei) Zuflußleitungen 7, 7' und 7" ab. Jede dieser Zuflußleitungen 7, 7', 7" speist eine Reihe oder Gruppe von Werkzeugteilen 1, von denen jeweils nur zwei gezeigt sind. Deren abflußseitige Ende (Pfeilspitze) mündet jeweils in der Zwischenleitung 9, das ist die zwischengeschaltete zusätzliche Anschlußleitung 9 bzw. 9' bzw. 9". Von letzterer wird wieder jeweils eine weitere Gruppe von Werkzeugteilen 1 gespeist, welche (mit der Pfeilspitze) in die jeweilige Abflußleitung 8, 8' bzw. 8" münden. Diese Abflußleitungen 8, 8' und 8" sind mit dem abflußseitigen Verteilerrohr 6 verbunden und dieses mit dem Fluidauslaß 3.

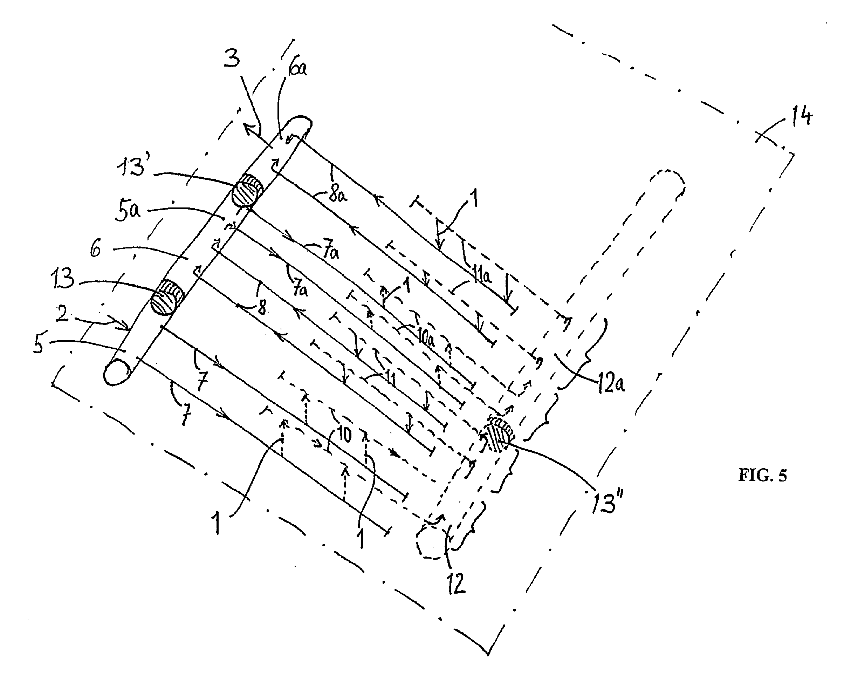

Bei der Ausführungsform der Figur 3 befindet sich das zuflußseitige Verteilerrohr 5 oben links in gerader Ausgestaltung in einer Linie mit dem im Abstand in Fließrichtung dahinter angeordneten abflußseitigen Verteilerrohr 6. Hier sind beide Verteilerrohre entweder geometrisch separat ausgeführt, zum Beispiel als Sacklochbohrung in dem massiven Material einer Platte eingearbeitet, oder die Trennung erfolgt durch einen Stopfen innerhalb einer durchgehenden Tieflochbohrung, welche durch den Stopfen in die zwei Teile, nämlich den zuflußseitigen Teil 5 und den abflußseitigen Teil 6, getrennt ist. Solche Stopfen sind in Figur 5 mit 13, 13' und 13" bezeichnet.

Gemäß Figur 3, welche das Grundsystem zeigt, geht von dem zuflußseitigen Verteilerrohr 5 die Zuflußleitung 7 ab, die an dem abstromigen Ende geschlossen ist. An zahlreichen Stellen geht eine Gruppe von Werkzeugteilen 1 ab, in welche das Kühlfluid einströmen und in den zuflußseitigen Leitungszweig 10 der allgemein mit 9 bezeichneten zusätzlichen Anschlußleitung abströmt. Dieser zuflußseitige Leitungszweig 10 ist gestrichelt dargestellt, denn er gehört zu der zusätzlichen Anschlußleitung 9. Er ist mit dem zwischengeschalteten Verteilerrohr 12 verbunden, welches in diesem Grundsystem auf der linken Seite das Kühlfluid aufnimmt und auf der rechten Seite abgibt. Letzteres ist durch den ebenfalls gestrichelt gezeigten abflußseitigen Leitungszweig 11 dargestellt, der an seinem abflußseitigen Ende ebenfalls geschlossen ist. Auch von ihm geht eine ganze Reihe von Werkzeugteilen 1 ab, deren abstromseitige Enden (Pfeilspitzen) in der Abflußleitung 8 münden. Am aufstromseitigen Ende ist diese Abflußleitung 8 ebenfalls geschlossen und mündet am abstromseitigen Ende in dem abflußseitigen Verteilerrohr 6.

In der Ausführungsform der Figur 4 strömt ähnlich wie bei dem ersten Kühlsystem nach Figur 1 das Kühlfluid aus dem Fluideinlaß 2 in das zuflußseitige Verteilerrohr 5 und von dort in die Zuflußleitung 7, die abstromseitig wieder geschlossen ist. Eine ganze Reihe von Werkzeugteilen 1 wird von dieser Zuflußleitung 7 mit Kühlfluid versorgt, welches in die gestrichelt gezeichnete und beidseitig geschlossene Zwischenleitung (die zusätzliche Anschlußleitung) 9 abfließt. Auch diese Zwischenleitung 9 ist mit einer Reihe von Werkzeugteilen verbunden, welche durch das Kühlfluid durchströmt und damit gekühlt werden. Die jeweilige Pfeilspitze veranschaulicht das abstromseitige Ende des Werkzeugteils 1, aus welchem das Kühlfluid in den zuflußseitigen Leitungszweig 10 und von diesem über das zwischengeschaltete Verteilerrohr 12 in den abflußseitigen Leitungszweig 11 abfließt, sofern man die Verwandtschaft des Grundsystems nach Figur 3 betrachtet.

Man kann Figur 4 aber auch im Hinblick auf das bekannte Kühlsystem betrachten, wenn man nämlich den zuflußseitigen Leitungszweig 10 links von der strichpunktierten Linie der Figur 4 als Abflußleitung betrachtet, welcher das Kühlfluid in ein abflußseitiges Verteilerrohr 6 führt, wenn dort der Abfluß wäre. Tatsächlich strömt das Kühlfluid aber in diesem zwischengeschalteten Verteilerrohr 12 weiter derart, daß aus dessen rechter Hälfte bezüglich der strichpunktierten Trennlinie der Figur 4 der abflußseitige Leitungszweig 11, also von dem Verteilerrohr 12 gespeist wird. Dieser Leitungszweig 11 könnte also auch als Zuflußleitung 7 des bekannten Kühlsystems betrachtet werden. Dieses Kühlsystem ist auf der rechten Seite der strichpunktierten Linie der Figur 4 nur gerade spiegelbildlich zur linken Hälfte angeordnet.

Es versteht sich aber, daß aus Figur 4 die Verdoppelung des bekannten Kühlsystems oder des Grundsystems dargestellt ist. Die Anzahl der nacheinander durchströmten Werkzeugteile 1 wird nämlich bei der Ausführungsform der Figur 4 gegenüber der der Figur 1 verdoppelt.

Unabhängig von dieser Verdoppelung gilt nach wie vor die Vervielfachung gemäß Figur 2, bei der nämlich anstelle einer Zuflußleitung 7 drei Zuflußleitungen 7, 7', 7" usw. eingesetzt werden können. Man erkennt die vorteilhafte Vervielfachungsmöglichkeit des Kühlsystems nach diesen Prinzipien.

Figur 5 zeigt eine weitere andere Ausführungsform eines Kühlsystems gemäß der Erfindung, gegenüber den schematischen Darstellung nach den Figuren 1 bis 4 etwas mehr konkretisiert. So ist beispielsweise durch die strichpunktierte Außenlinie eine Ebene angedeutet, die schräg im Raum liegt. Diese Ebene könnte beispielsweise eine Trägerplatte 14 darstellen. Von dieser Trägerplatte 14 kann man sich senkrecht zu dieser Ebene vertikal nach oben herausstehend Formkerne als Werkzeugteile 1 denken, deren Zustrom des Kühlfluids zum Beispiel in einer oberen Ebene der Trägerplatte 14 außen liegt und deren Abstromende in derselben Ebene weiter innen liegt. Gleichwohl ist in Figur 5 das jeweilige Werkzeugteil 1 (mit durchgezogenen Linien oder gestrichelt) als Pfeil dargestellt, der jeweils zwei Leitungen verbindet, um darzustellen, daß das Kühlfluid aus der einen Leitung in Pfeilrichtung in die andere strömt. Das Prinzip wird für den Leser dadurch klarer und dennoch ist das Durchströmen eines Formkerns eines Spritzgießwerkzeugs nach dem Prinzip dieses Kühlsystems dasselbe. Mit durchgezogenen Linien ist (mehr auf der linken Seite) ein Leitungssystem im unteren Niveau der Trägerplatte 14 dargestellt, während gestrichelt das gegenüberliegende andere Leitungssystem im oberen Niveau angeordnet zu denken ist. So befinden sich die zuflußseitigen Verteilerrohre 5, 5a sowie die abflußseitigen Verteilerrohre 6, 6a im unteren Niveau, während sich die zuflußseitigen Leitungszweige 10 und 10a ebenso im oberen Niveau befinden wie die abflußseitigen Leitungszweige 11 und 11a. Ebenfalls im oberen Niveau befinden sich die zwischengeschalteten Verteilerrohre 12 und 12a, die in einer Linie hintereinander verlaufen und durch einen Stopfen 13" voneinander getrennt sind. Auf der gegenüberliegenden Seite (oben links in Figur 5) ist das zuflußseitige Verteilerrohr 5 durch den Stopfen 13 von dem abflußseitigen Verteilerrohr 6 getrennt. Letzteres geht in das zuflußseitige Verteilerrohr 5a der nächsten Sektion über und ist in Erstreckungsrichtung dieses Verteilerrohres 5a dahinter durch den Stopfen 13' gegenüber dem abflußseitigen Verteilerrohr 6a getrennt. Dadurch, daß man Verteilerrohre und Leitungen bei dem Kühlsystem in der Trägerplatte 14 durch Erstellung von Tieflochbohrungen ausführt, sind die Verteilerrohre 5, 6, 12 gerade und verlaufen in der Trägerplatte 14 im Abstand zueinander parallel. Zusätzlich verlaufen das mit ausgezogenen Linien gezeichnete Verteilerrohr in der unteren Ebene der Trägerplatte 14 mit seinen Abschnitten in einer Linie hintereinander, entweder durch einen Stopfen 13, 13' im Abstand voneinander gehalten oder durch das Material der Trägerplatte 14 selbst, wenn das jeweilige Verteilerrohr nur wie eine Sacklochbohrung ausgeführt ist.

Etwa senkrecht zu der Erstreckungsrichtung der Verteilerrohre verlaufen die Anschlußleitungen, nämlich die Zuflußleitungen 7 und 7a (in der unteren Höhe, unteres Niveau). Parallel zu diesen liegen im unteren Niveau die Abflußleitungen 8 und 8a.

Bei der Ausführungsform der Figur 5 sind die sogenannten zusätzlichen Anschlußleitungen bzw. die Zwischenleitungen 9 in einen zuflußseitigen Leitungszweig 10 und einen abflußseitigen Leitungszweig 11 aufgeteilt, die über das Verteilerrohr 12 verbunden sind. Es handelt sich hier um die gestrichelt gezeichneten Leitungen und Verteilerrohre, die sich auf dem oberen Niveau der Trägerplatte 14 befinden.
Man hat dadurch eine Realisierung des Grundsystems. Außerdem ist eine Verdoppelung des Grundsystems durchgeführt, bei welchem eine Schaltung gemäß Figur 3 verdoppelt ist, so daß die Anzahl der nacheinander durchströmten Werkzeugteile 1 bzw. Formkerne verdoppelt wird. Aus der zweifachen Reihenkühlung ist eine Vierfachreihenkühlung gemacht.

Folgt man dem Strom des Kühlfluids von dem Fluideinlaß 2 (links oben in Figur 5), dann strömt das Fluid über das zuflußseitige Verteilerrohr 5 in die Zuflußleitung 7, über die erste Gruppe von Werkzeugteilen 1 hinüber in den zuflußseitigen Leitungszweig 10; von dort (jetzt im oberen Niveau) in das zwischengeschaltete Verteilerrohr 12. Das Fluid verläßt dieses Verteilerrohr 12 durch die abflußseitigen Leitungszweige 11, von denen die zweite Gruppe von Werkzeugteilen 1 angeströmt wird, damit das Kühlfluid über die Abflußleitung 8 in das abflußseitige Verteilerrohr 6 strömt. In der Verlängerung entwickelt sich dieses zu dem zuflußseitigen Verteilerrohr 5a, nämlich vor dem zweiten Stopfen 13' und verläßt dieses Verteilerrohr 5a durch die Zuflußleitung 7a, über die dritte Gruppe von Werkzeugteilen 1 in den zuflußseitigen Leitungszweig 10a hinein. Aus diesem nimmt das zwischengeschaltete Verteilerrohr 12a das Fluid auf und gibt es über die abflußseitigen Leitungszweige 11 a in die letzte und vierte Gruppe von Werkzeugteilen 1 ab. Durch letztere strömt das Fluid nun in die Abflußleitung 8a, das abflußseitige Verteilerrohr 6a und durch den Fluidauslaß 3 ab.

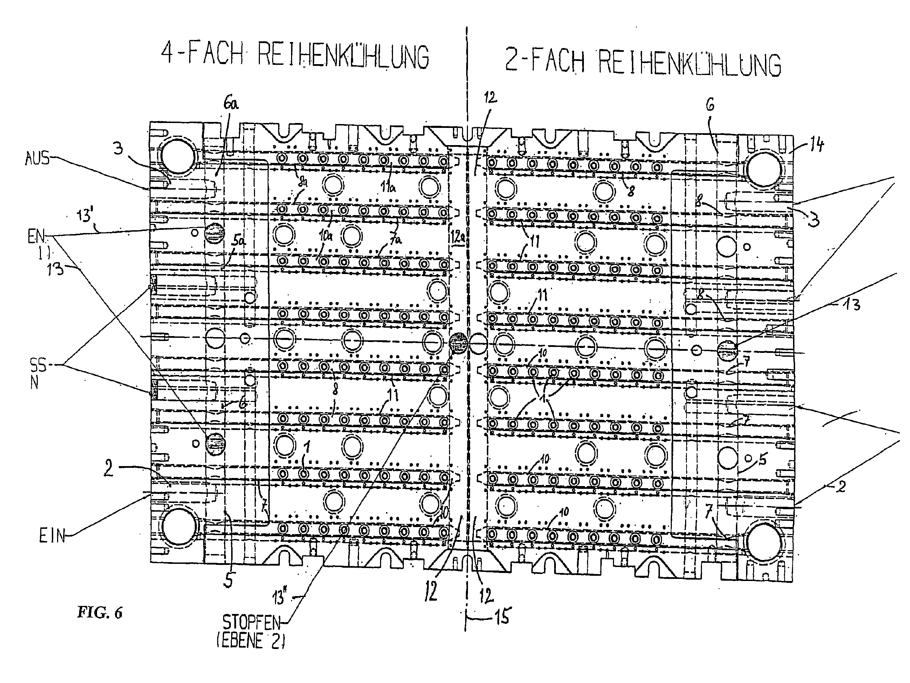

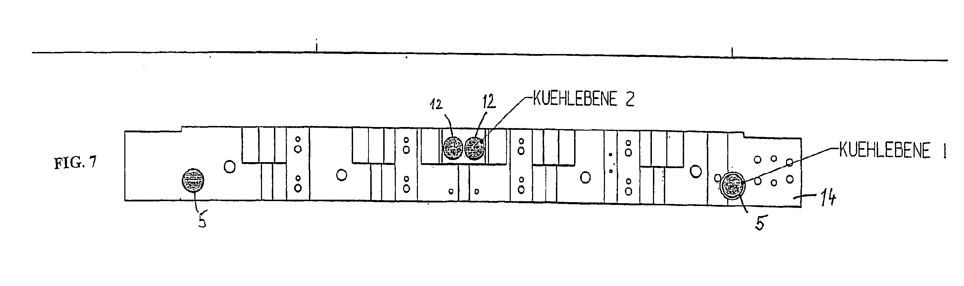

In den Figuren 6 und 7 ist eine Trägerplatte in Gestalt einer Kernplatte in konkreterer Ausführungsform gezeigt. In Draufsicht sieht man in Figur 6 in der linken Hälfte eine Vierfachreihenkühlung und in der rechten Hälfte eine Zweifachreihenkühlung, obwohl die Anzahl der Bohrungen in beiden Hälften gleich ist. Der Unterschied kommt dadurch zustande, daß in der rechten Hälfte der Zweifachreihenkühlung in der Platte 14 in dem rechten unteren Verteilungsrohr 6 mittig nur ein einziger Stopfen 13 angeordnet ist; in dem links oben (oberes Niveau) angeordneten Verteilerrohr 5, 6, zwei Stopfen angeordnet sind.

Anhand Figur 6 wird zunächst die Ausführungsform mit der Zweifachkühlung rechts von der strichpunktierten Mittellinie 15 erläutert. Es handelt sich hier um das Grundsystem gemäß Figur 3, wenn man diese gespiegelt betrachtet. Es werden nur zwei Gruppen von Werkzeugteilen 1 in Form von Formkernen durchströmt.

Aus dem Fluideinlaß 2 strömt das Kühlfluid in das unten angeordnete zuflußseitige Verteilerrohr 5, von welchem die ebenfalls unten liegenden Zuflußleitungen 7 gespeist werden. Zwischen diesen Leitungen 7 und den darüber angeordneten zuflußseitigen Leitungszweigen 10 befindet sich die erste Gruppe von Werkzeugteilen 1 in Form der Formkerne, die dem Betrachter der Figur 6 entgegen der Blickrichtung vertikal entgegen hoch stehen. Die Aufnahmen für diese Formkerne bzw. Werkzeugteile 1 sind als Kreise zu erkennen (in Figur 3 würde man den Werkzeugteilen 1 entgegen der Pfeilrichtung auf die Pfeilspitzen entgegenblicken). Das Kühlfluid verläßt den zuflußseitigen Leitungszweig 10 über das nicht geteilte, zwischengeschaltete Verteilerrohr 12, in welches das Fluid aus den unteren vier Leitungszweigen 10 einströmt und über die in Figur 6 oben gezeichneten vier abflußseitigen Leitungszweige 11 wieder nach rechts verläßt (immer noch im oberen Niveau).

Wie in Figur 3 schematisch gezeigt ist, strömt das Fluid aus dem oberen, abflußseitigen Leitungszweig 11 durch die Werkzeugteile 1 in die parallel und darunter angeordnete Abflußleitung 8. Diese Abflußleitung 8 ist rechts mit dem oberen Teil des rechten, unteren Verteilerrohres, nämlich dem abflußseitigen Verteilerrohr 6 verbunden, aus welchem das Kühlfluid über den Fluidauslaß 3 die Trägerplatte 14 verläßt.

In der linken Hälfte der Trägerplatte 14 der Figur 6, die im Querschnitt in Figur 7 mit dem Raum für die zwei unterschiedlichen Niveaus gezeigt ist, sind mehr Stopfen vorgesehen, nämlich ähnlich wie in Figur 5 in dem oberen, zwischengeschalteten Verteilerrohr 12 ein Stopfen 13" und gegenüber links fast am Rand der Platte 14 im unteren Niveau in dem Verteilerrohr 5, 6 zwei Stopfen 13 und 13'. Gegenüber der Ausführungsform der rechten Hälfte ist die Anzahl der Reihen oder Gruppen von Werkzeugteilen 1 verdoppelt, nämlich vom Durchströmen zweier Gruppen oder Reihen von Werkzeugteilen 1 auf der rechten Seite auf vier Gruppen von Werkzeugteilen 1 auf der linken Seite. Man kann sich hier anhand Figur 5 orientieren.

Der Fluideinlaß 2 ist links angeordnet und mündet in das im unteren Niveau der Trägerplatte 14 angebrachte zuflußseitige Verteilerrohr 5. Von dort strömt das Fluid durch die Zuflußleitung 7 (es wird im Singular gesprochen, obwohl zwei parallele Zuflußleitungen vorhanden sind), über welcher der im oberen Niveau angeordnete zuflußseitige Leitungszweig 10 gebohrt ist. Dazwischen befindet sich wieder die Reihe bzw. Gruppe der Werkzeugteile 1, die von dem Kühlfluid auf dem Weg von der Zuflußleitung 7 zum zuflußseitigen Leitungszweig 10 durchströmt werden. Die Abströmung erfolgt in das zwischengeschaltete Verteilerrohr 12, welches sich ähnlich in der Figur 6 nach oben erstreckt wie bei der Ausführungsform der rechten Hälfte, jedoch mit dem Unterschied, daß dieses zwischengeschaltete Verteilerrohr 12 oben am Stopfen 13" endet. Das Kühlfluid kann wieder die im oberen Niveau befindlichen abflußseitigen Leitungszweige 11, danach die Gruppen von Werkzeugteilen 1 und die darunter befindlichen Abflußleitungen 8 durchströmen. Die Leitungen 8 münden am linken Ende der Trägerplatte 14 in das abflußseitige Verteilerrohr 6. Dieses Verteilerrohr 6 nimmt das Kühlfluid auf und geht im abstromigen Teil (der Hälfte) dahinter in das zuflußseitige Verteilerrohr 5a über. Letzteres endet an dem oberen Stopfen 13' und ist deshalb zuflußseitig genannt, weil es den Zufluß nach rechts in die Zuflußleitungen 7a erlaubt. Das Kühlfluid tritt dann durch die Werkzeugteile 1 in die über den Zuflußleitungen 7a angeordneten zuflußseitigen Leitungszweige 10a und nach rechts weg in das zwischengeschaltete Verteilerrohr 12a, welches von dem in Linie verlaufenden Verteilerrohr 12 (unten) durch den Stopfen 13" getrennt ist. Aus diesem Verteilerrohr 12a strömt das Fluid zum Schluß durch die abflußseitigen Leitungszweige 11a durch die Gruppen von Werkzeugteilen 1 in die Abflußleitung 8a und über das abflußseitige Verteilerrohr 6a durch den Fluidauslaß 3 ab. Wiederum kann man sich leichter an der schematischen Darstellung der Figur 5 orientieren.

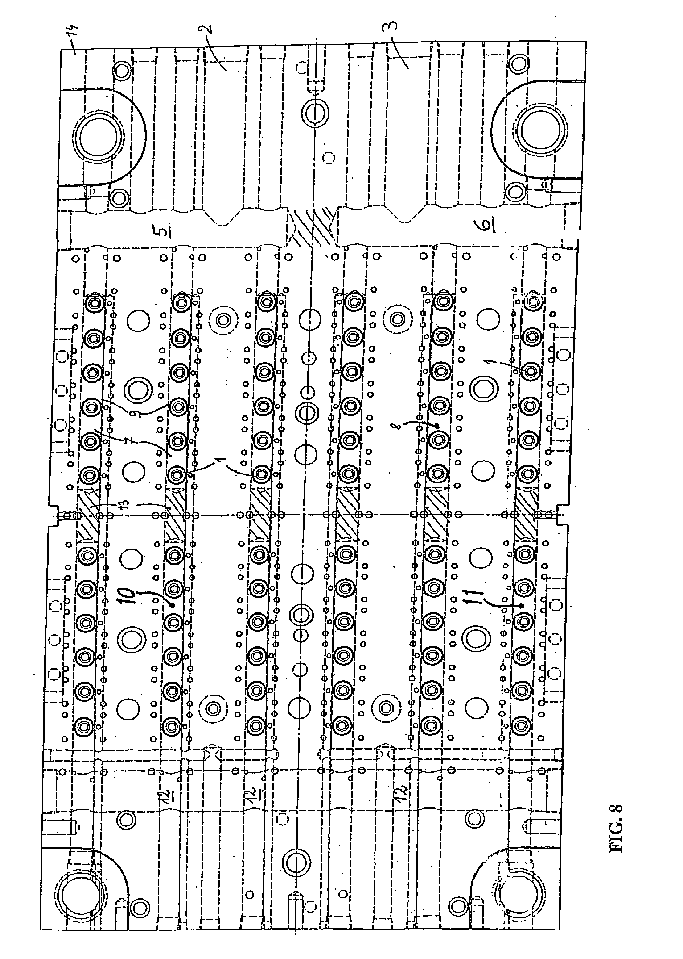

Eine wieder andere Ausführungsform ist in konkreter Ausgestaltung einer Trägerplatte 14 in Figur 8 gezeigt. Bei dieser Ausführungsform kann man sich an den Darstellungen des bekannten Kühlsystems orientieren, also im Prinzip anhand Figur 2. Man erkennt in der in Draufsicht in Figur 8 dargestellten Trägerplatte etwa in der Mitte schraffierte Bereiche in den Anschlußleitungen, die in Figur 8 von links nach rechts verlaufen, und ebenso einen etwa in der Mitte befindlichen Zwischenbereich in dem rechts angeordneten Verteilerrohr. Diese schraffierten Bereiche bedeuten stehen gelassenes Material, welches also eine Sperre oder Barriere wie ein Stopfen bildet. Es handelt sich bei dieser Ausführungsform der Figur 8 um eine Vierfachreihenkühlung ähnlich wie bei Figur 4 nach dem bekannten Kühlsystem.
Aus dem Fluideinlaß 2 strömt das Fluid in das oben befindliche zuflußseitige Verteilerrohr 5 und aus diesem nach links ab (unteres Niveau) in drei parallel geschaltete Zuflußleitungen 7. Über letzteren sind im oberen Niveau zusätzliche Anschlußleitungen 9 (Zwischenleitungen) angeordnet. Wieder sind zwischen der Zuflußleitung 7 und der Zwischenleitung 9 Werkzeugteile 1 in Durchströmverbindung angeordnet und in Form der Mehrfachkreise gezeigt. Eine Reihe dieser Werkzeugteile 1 in Form von Formkernen besteht aus sechs Formkernen, und es werden drei Reihen gleichzeitig angeströmt. Es sind also achtzehn Formkerne parallel geschaltet. Die Barrieren, in Figur 8 der Einfachheit halber wie die Stopfen mit 13 bezeichnet, befinden sich nur im unteren Niveau der Zuflußleitung 7, während das Kühlfluid im oberen Niveau in der Zwischenleitung 9 weiter bis zu der nächsten Gruppe von drei mal sechs Werkzeugteilen 1 strömen kann. Diese werden durchströmt und durch den zunächst zuflußseitigen Leitungszweig 10 genannten Zweig abgeführt und in das zwischengeschaltete Verteilerrohr 12 geleitet.
Die oberen drei Anschlußleitungen 9 werden in das oben angeordnete Verteilerrohr 12 eingespeist, wie schematisch in Figur 4 in der linken Hälfte neben der strichpunktierten Linie gezeigt ist. Überschreitet das Kühlfluid in Figur 4 diese Linie durch Weiterströmen in dem zwischengeschalteten Verteilerrohr 12, dann tritt das Fluid in die andere Hälfte ein, also zunächst in die im unteren Niveau befindlichen abflußseitigen Leitungszweige 11, fließt aus diesen über die Werkzeugteile 1 in das obere Niveau in die zusätzliche Anschlußleitung oder Zwischenleitung 9 und in Figur 8 in die rechte Hälfte der Platte 14. Jetzt ist bereits die dritte Gruppe von Werkzeugteilen kühlend von dem Fluid durchströmt worden. In dem rechten unteren Quadranten der Platte 14 strömt nach Figur 8 das Fluid nun durch die letzte und vierte Gruppe von Werkzeugteilen 1 in die im unteren Niveau befindliche Abflußleitung 8, um von dort nach rechts in das abflußseitige Verteilerrohr 6 und von dort über den Fluidauslaß 3 abzuströmen. Gegebenenfalls kann man sich zum Nachvollziehen des Strömungswegs des Kühlfluids an Figur 4 orientieren.

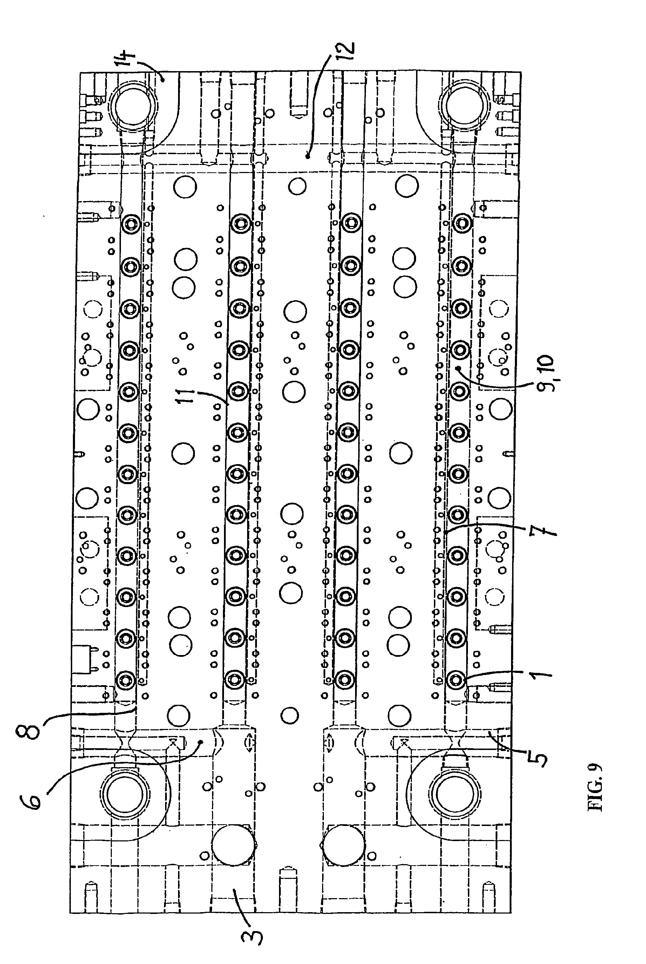

Figur 9 zeigt eine ähnlich aufgebaute Trägerplatte 14 wie Figur 8, wobei man sich aber die in der Mitte der Figur 8 angeordneten Barrieren oder Stopfen 13 wegdenken kann derart, daß die von dem im unteren Niveau befindlichen zuflußseitigen Verteilerrohr 5 nach rechts abströmende Kühlflüssigkeit in jeweils eine Zuflußleitung 7 strömt, die sich über den größten Teil der Länge der Trägerplatte 14 von links nach rechts erstreckt und Anschluß an zwölf Werkzeugteile 1 hat. Diese erste Gruppe von Werkzeugteilen 1 wird bei der Ausführungsform der Figur 9 parallel durchströmt. Das Kühlfluid verläßt diese Werkzeugteile 1 (in der Form von Formkemen) auf dem oberen Niveau durch die zusätzliche Anschlußleitung (Zwischenleitung) 9, die rechts in das zwischengeschaltete Verteilerrohr 12 mündet. Dieses nimmt in Figur 9 von den unteren beiden Reihen von jeweils zwölf Werkzeugteilen 1 das Fluid auf, führt es nach oben und gibt es, ähnlich wie schematisch in Figur 3 gezeigt ist, wieder in den abflußseitigen Leitungszweig 11 ab. Dieser ist ein Teil der zusätzlichen Anschlußleitung (Zwischenleitung) 9, ebenso wie die vorstehend beschriebene Zwischenleitung 9, welche das Verteilerrohr 12 speist, auch ein zuflußseitiger Leitungszweig 10 ist. Nach Verlassen des abflußseitigen Leitungszweiges 11 strömt das Kühlfluid nun in die zweite und letzte Gruppe von Werkzeugteile 1 und verläßt die Platte 14 über die Abflußleitung 8 und das abflußseitige Verteilerrohr 6 durch den Fluidauslaß 3. Zur Veranschaulichung dieses sogenannten Grundsystems kann man sich an der schematischen Figur 3 orientieren.

### Bezugszeichenliste:

- 1: Werkzeugteil
- 2: Fluideinlaß
- 3: Fluidauslaß
- 4: Kernplatte (= Trägerplatte)
- 5, 5a: zuflußseitiges Verteilerrohr
- 6, 6a: abflußseitiges Verteilerrohr
- 7, 7a: Anschlußleitung - Zuflußleitung
- 8, 8a: Anschlußleitung - Abflußleitung
- 9, 9a: Zwischenleitung (zusätzliche Anschlußleitung)
- 10,10a: zuflußseitiger Leitungszweig der Zwischenleitung 9
- 11,11a: abflußseitiger Leitungszweig der Zwischenleitung 9
- 12,12a: zwischengeschaltetes Verteilerrohr
- 13: Stopfen
- 13': Stopfen
- 13": Stopfen
- 14: Trägerplatte
- 15: Mittellinie

## Patentansprüche

1. Kühlsystem zum Kühlen von Werkzeugteilen (1) mit Hilfe eines von einem Fluideinlaß (2) über Anschlußleitungen (7, 8, 9) zu einem Fluidauslaß (3) geführten Fluids, wobei die Werkzeugteile (1) zwischen wenigstens einer mit dem Fluideinlaß (2) verbundenen und wenigstens einer mit dem Fluidauslaß (3) verbundenen Anschlußleitung (7, 8, 9) in Durchströmverbindung angeschlossen sind, wobei zwischen der wenigsten einen mit dem Fluideinlaß (2) verbundenen Anschlußleitung (7) einerseits und der wenigstens einen mit dem Fluidauslaß (3) verbundenen Anschlußleitung (8) andererseits wenigstens eine zusätzliche Anschlußleitung (9; 10 - 12) und mit letzterer in Strömungsverbindung stehende Werkzeugteile (1) derart zwischengeschaltet sind, daß das Fluid auf seinem Strömungsweg nacheinander durch wenigstens zwei Werkzeugteile (1) strömt, wobei der Fluideinlaß (2) und/oder der Fluidauslaß (3) jeweils mit einem Verteilerrohr (5 und/oder 6) verbunden ist, und das Verteilerrohr (5, 6, 12) durch wenigstens einen strömungsdicht eingesetzten Stopfen (13, 13', 13") in wenigstens zwei getrennte Abschnitte (5, 6) aufgeteilt ist oder durch zwei Sacklochbohrungen gebildet ist, so daß es aus wenigstens zwei getrennten Abschnitten besteht, und wobei das Werkzeugteil (1) ein hülsenförmiger Formkern eines Spritzgießwerkzeugs zum Spritzgießen von Vorformlingen aus Kunststoff ist.

2. Kühlsystem nach Anspruch 1, **dadurch gekennzeichnet, daß** die zusätzliche Anschlußleitung (9) zwei geschlossene Enden hat und zuflußseitig sowie abflußseitig mit den Kernen (1) verbunden ist.

3. Kühlsystem nach Anspruch 1 oder 2, **dadurch gekennzeichnet, daß** die zusätzliche Anschlußleitung (9) in einen zuflußseitigen Leitungszweig (10) und einen abflußseitigen Leitungszweig (11) aufgeteilt ist, die über ein Verteilerrohr (12) verbunden sind.

4. Kühlsystem nach einem der Ansprüche 1 bis 3, **dadurch gekennzeichnet, daß** die Verteilerrohre (5, 6, 12) gerade sind und in einer Platte (14) im Abstand zueinander parallel verlaufen.

5. Kühlsystem nach einem der Ansprüche 1 bis 3, **dadurch gekennzeichnet, daß** die Verteilerrohre (5, 6, 12) gerade sind und in einer Platte (14) in einer Linie hintereinander im Abstand zueinander verlaufen.

6. Kühlsystem nach einem der Ansprüche 1 bis 5, **dadurch gekennzeichnet, daß** mehrere, parallel und im Abstand zueinander verlaufende zusätzliche Anschlußleitungen (7', 7", 8', 8", 9', 9") mit jeweils angeschlossenen Kernen (1) als Werkzeugteile zwischengeschaltet sind.

7. Kühlsystem nach einem der Ansprüche 1 bis 6, **dadurch gekennzeichnet, daß** bei Verdoppelung des Grundsystems, bei welchem die zusätzliche Anschluß- bzw. die Zwischenleitung wenigstens ein geschlossenes Ende hat und diese Leitung zuflußseitig und/oder abflußseitig mit den Werkzeugteilen verbunden ist, die Anzahl der nacheinander durchströmten Kerne (1) verdoppelt wird.

8. Kühlsystem nach einem der Ansprüche 1 bis 7, **dadurch gekennzeichnet, daß** die zusätzlichen Anschlußleitungen (9) in der Platte (14) in einem anderen Niveau als die mit dem Ein- (2) und/oder Auslaß (3) verbundenen Anschlußleitungen (7, 8) angeordnet sind.

## Claims

1. A cooling system for cooling tool parts (1) with the aid of a fluid guided from a fluid inlet (2) through connector lines (7, 8, 9) to a fluid outlet (3), the tool parts (1) being connected in the direction of through-flow between at least one connector line (7, 8, 9) connected to the fluid inlet (2) and at least one connected to the fluid outlet (3), whereas between the at least one connector line (7) connected to the fluid inlet (2), on the one hand, and the at least one connector line (8) connected to the fluid outlet (3), on the other, at least one additional connector line (9; 10 - 12) and tool parts (1) which are in flow communication therewith are placed in between such that, on its flow path, the fluid flows through at least two tool parts (1) one after the other, whereas the fluid inlet (2) and/or the fluid outlet (3) are each connected to a distributor pipe (5 and/or 6) and the distributor pipe (5, 6, 12) is divided by at least one plug (13, 13', 13"), inserted in flow-tight manner, into at least two separate sections (5, 6) or formed by two blind bores, so that the distributor pipe consists of at least two separate sections, and whereas the tool part (1) is a tube-shaped mould core of an injection mould for injection moulding parisons made of synthetic material.

2. A cooling system according to Claim 1, **characterised in that** the additional connector line (9) has two closed ends and is connected on both the inflow side and the outflow side to the tool parts (1).

3. A cooling system according to one of Claims 1 or 2, **characterised in that** the additional connector line (9) is divided into an inflow line branch (10) and an outflow line branch (11), these being connected by way of a distributor pipe (12).

4. A cooling system according to one of Claims 1 to 3, **characterised in that** the distributor pipes (5, 6, 12) are straight and run parallel and spaced from one another in a plate (14).

5. A cooling system according to one of Claims 1 to 3, **characterised in that** the distributor pipes (5, 6, 12) are straight and run in a line, one behind the other and spaced from one another, in a plate (14).

6. A cooling system according to one of Claims 1 to 5, **characterised in that** a plurality of additional connector lines (7', 7", 8', 8", 9', 9") running parallel and spaced from one another with connected cores (1) as tool parts are placed in between.

7. A cooling system according to one of Claims 1 to 6, **characterised in that** the number of cores (1) through which flow successively takes place is doubled, in a doubling of the basic system, in which the additional connector line or intermediate line comprises at least one closed end and is with the inflow-side and/or outflow-side coupled with the toll parts.

8. A cooling system according to one of Claims 1 to 7, **characterised in that** the additional connector lines (9) are arranged in the plate (14) at a different level from the connector lines (7, 8) connected to the inlet (2) and/or outlet (3).

## Revendications

1. Système de refroidissement destiné à refroidir des parties d'outil (1) à l'aide d'un fluide amené d'une entrée de fluide (2) à une sortie de fluide (3) via des conduits de raccordement (7, 8, 9), les parties d'outil (1) étant raccordées en liaison d'écoulement entre au moins un conduit de raccordement (7, 8, 9) relié à l'entrée de fluide (2) et au moins un conduit de raccordement (7, 8, 9) relié à la sortie de fluide (3), au moins un conduit de raccordement supplémentaire (9 ; 10 à 12) et des parties d'outil (1) en liaison d'écoulement avec ce dernier étant montés en position intermédiaire entre d'une part l'au moins un conduit de raccordement (7) relié à l'entrée de fluide (2) et d'autre part l'au moins un conduit de raccordement (8) relié à la sortie de fluide (3) de sorte que le fluide s'écoule successivement, sur son trajet d'écoulement, dans au moins deux parties d'outil (1), l'entrée de fluide (2) et/ou la sortie de fluide (3) étant chacune reliée à un tube distributeur (5 et/ou 6), et le tube distributeur (5, 6, 12) étant divisé par au moins un bouchon (13, 13', 13"), inséré de façon étanche à l'écoulement, en au moins deux portions séparées (5, 6) ou étant formé par deux perçages borgnes de sorte qu'il est constitué d'au moins deux portions séparées, et la partie d'outil (1) étant un noyau de formage, en forme de manchon, d'un outil de moulage par injection destiné à mouler par injection des préformes de matière plastique.

2. Système de refroidissement selon la revendication 1, **caractérisé en ce que** le conduit de raccordement supplémentaire (9) possède deux extrémités fermées et est relié en amont ainsi qu'en aval aux noyaux (1).

3. Système de refroidissement selon la revendication 1 ou 2, **caractérisé en ce que** le conduit de raccordement supplémentaire (9) est divisé en une branche de conduit amont (10) et en une branche de conduit aval (11) qui sont reliées par un tube distributeur (12).

4. Système de refroidissement selon l'une des revendications 1 à 3, **caractérisé en ce que** les tubes distributeurs (5, 6, 12) sont rectilignes et s'étendent dans une plaque (14) en parallèle à distance l'un de l'autre.

5. Système de refroidissement selon l'une des revendications 1 à 3, **caractérisé en ce que** les tubes distributeurs (5, 6, 12) sont rectilignes et s'étendent dans une plaque (14) successivement sur une ligne à distance l'un de l'autre.

6. Système de refroidissement selon l'une des revendications 1 à 5, **caractérisé en ce que** plusieurs conduits de raccordement supplémentaires (7', 7", 8', 8", 9', 9"), qui s'étendent en parallèle à distance l'un de l'autre et à chacun desquels est raccordé un noyau (1) en tant que partie d'outil, sont montés en position intermédiaire.

7. Système de refroidissement selon l'une des revendications 1 à 6, **caractérisé en ce que**, lorsque l'on double le système de base dans lequel le conduit de raccordement supplémentaire ou le conduit intermédiaire possède au moins une extrémité fermée et dans lequel ce conduit est relié en amont et/ou en aval aux parties d'outil, on double le nombre de noyaux (1) traversés successivement par l'écoulement.

8. Système de refroidissement selon l'une des revendications 1 à 7, **caractérisé en ce que** les conduits de raccordement supplémentaires (9) sont disposés dans la plaque (14) à un autre niveau que celui des conduits de raccordement (7, 8) reliés à l'entrée (2) et/ou la sortie (3).
